# EUROPÄISCHE PATENTSCHRIFT

(11) **EP 3 448 786 B1**
(45) Veröffentlichungstag und Bekanntmachung des Hinweises auf die Patenterteilung: **05.01.2022**
(21) Anmeldenummer: 17719835.5
(22) Anmeldetag: 24.04.2017
(51) Int. Cl.: B65G 43/10, B23Q 15/24, B65G 54/02

(54) **VERFAHREN UND VORRICHTUNG ZUM BEWEGEN VON PORTIONEN**
METHOD AND DEVICE FOR MOVING PORTIONS
PROCÉDÉ ET DISPOSITIF DE DÉPLACEMENT DE LOTS

(30) Priorität: 29.04.2016 DE 102016108002
(43) Veröffentlichungstag der Anmeldung: 06.03.2019
(73) Patentinhaber: Weber Maschinenbau GmbH Breidenbach, 35236 Breidenbach (DE)
(72) Erfinder: NICHAU, Marco, 57334 Bad Laasphe (DE); ECKHARDT, Christoph, 35236 Breidenbach (DE)
(74) Vertreter: Manitz Finsterwald Patent- und Rechtsanwaltspartnerschaft mbB
(86) Internationale Anmeldenummer: PCT/EP2017/059607
(87) Internationale Veröffentlichungsnummer: WO 2017/186619

(56) Entgegenhaltungen:
- EP-A1- 0 482 424
- EP-A1- 3 173 886
- EP-A2- 1 977 893
- WO-A1-2015/036197
- DE-A1-102012 210 329
- DE-A1-102013 112 091
- US-B1- 6 191 507

## Beschreibung

Die Erfindung betrifft ein Verfahren sowie eine Vorrichtung zum Bewegen von Portionen, die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen.

Insbesondere bei der Produktion von Ein- oder Mehrsorten-Packungen, die eine oder mehrere Portionen aus beispielsweise Wurst- und/oder Käsescheiben enthalten, werden Fördersysteme benötigt, um die mittels einer oder mehrerer Aufschneidevorrichtungen, insbesondere so genannter Slicer, erzeugten und Portionen oder Teilportionen bildenden Lebensmittelscheiben zumindest einer Verpackungsvorrichtung zuzuführen.

Das Fördersystem dient in der Praxis nicht lediglich dem Transport der Portionen vom Slicer zur Verpackungsvorrichtung, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatbildung entsprechend den Anforderungen einer Verpackungsvorrichtung genannt werden sollen. Unmittelbar im Anschluss an den Slicer können außerdem Portionierungs- sowie Komplettierungsaufgaben zu erfüllen sein. Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden und grundsätzlich auf die Handhabung eines Stromes von Portionen ausgelegt. Es ist nicht oder allenfalls bedingt möglich, mit einem Förderbandsystem Einfluss auf eine einzelne Portion zu nehmen. Problematisch insbesondere im Hinblick auf den geforderten schonenden Transport der Portionen sind außerdem z.B. die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatsatzbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Bekannt, z.B. aus DE 10 2014 106 400 A1, ist auch eine Transportvorrichtung mit einer Mehrzahl individuell bewegbarer Transportmover zum Transport der Portionen, und einem Bahnsystem für die Transportmover, in welchem die Transportmover entlang wenigstens einer vorgegebenen Bahn in einer Transportrichtung bewegbar sind. Eine Steuereinrichtung steuert hierbei die Bewegungen der Transportmover in dem Bahnsystem.

Die Transportmover können einzeln oder jeweils als zusammengeschlossene Einheit bewegt werden.

Eine derartige Bewegungsvorrichtung hat gegenüber herkömmlichen Förderbandsystemen viele Vorteile. So können die Portionen beispielsweise von der Aufnahme bis zur Abgabe ohne eine weitere Portionsübergabe transportiert werden. Im Vergleich dazu weisen Förderbandsysteme viele Übergänge zwischen einzelnen Bändern auf. Diese Übergänge können die Portionen, z.B. deren Aufbau oder Struktur, eventuell negativ beeinflussen. Durch das Bahnsystem werden Portionsübergaben vermieden oder wenigstens minimiert. Ferner können Sensoren eingespart werden, welche z.B. als Lichtschranken zur Überprüfung der Lagen der Portionen bei Förderbandsystemen notwendig sind.

Auch fahren immer nur belegte Transportmover los, sodass keine Lücken entstehen und kein Umlauf von leeren Transportmovern auftritt.

Die Transportmover umfassen jeweils zumindest einen mit dem Bahnsystem zusammenwirkenden Läufer und wenigstens einen am Läufer angebrachten Träger für Portionen. Vorzugsweise transportiert jeder Transportmover direkt oder indirekt auf dem Träger zumindest eine Portion. Ein Transportmover kann mehrere Läufer für den Träger aufweisen. Eine derartige Transportmover-Einheit wird auch als Tandempuck bezeichnet. Jeder Transportmover kann also zumindest eine Portion transportieren.

Auch können mehrere Portionen auf einem Träger aufgenommen werden, beispielsweise nebeneinander. Ein derartiger Träger, auf dem zwei Portionen nebeneinander abgelegt und transportiert werden können, wird auch als Tandem-Träger bezeichnet.

Ferner können mehrere, z.B. zwei unmittelbar aufeinander folgende, Transportmover gemeinsam eine oder mehrere Portionen transportieren.

Ein für diesen Zweck grundsätzlich verwendbares Transportsystem, auf das hiermit im Hinblick auf das Erfordernis der Ausführbarkeit ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transporter von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Bei bisherigen Transportvorrichtungen, bei denen eine Mehrzahl individuell bewegbarer Transportmover auf einem Bahnsystem bewegt werden, sind zwar Pufferbereiche vorhanden bzw. die Transportmover werden automatisch gepuffert, da diese stets bis auf einen vorgebbaren Zwischenabstand auf einen vorausfahrenden Transportmover auffahren. Dies hat jedoch den Nachteil, dass es systembedingt auf manchen Streckenabschnitten zu einem Rückstau der Transportmover kommt. Der Rückstau beginnt stets an oder kurz vor einem so genannten Funktionspunkt, also beispielsweise einer Aufschneidevorrichtung oder einer Verpackungsvorrichtung, an dem ein Transportmover zum Halten kommt.

Herkömmlich erfolgt der Betrieb der Transportvorrichtung zwischen zwei Funktionspunkten auf der Bahnstrecke nach dem Prinzip "fire and forget", also einem Losschicken der Transportmover, ohne diese zunächst weiter zu überwachen. So werden beispielsweise beim Transport von Portionen die Transportmover nach dem Belegen der Träger losgeschickt. Zwischen der Übergabeeinrichtung und dem Verpackungsbereich bzw. einer Kamera des dortigen Pickers, also eines Roboters mit Portionsgreifer, findet keine Überwachung der Transportmover statt. Die Transportmover fahren nach dem Belegen mit den Portionen los und werden erst wieder von der Picker-Kamera erkannt.

Daher gilt zwischen einem Bereich, an dem die Träger die Portionen erhalten, und einem Verpackungsbereich bzw. der Kamera der Verpackungsvorrichtung die Devise, dass die Transportmover losfahren, bis sie auf einen vorausfahrenden Transportmover treffen.

Es kann folglich zu einem Rückstau von Transportmovern kommen, möglicherweise bis in einen Bereich, an dem die Träger die Portionen erhalten, beispielsweise wenn die Verpackungsvorrichtung keine Portionen abnimmt oder aus irgendeinem Grund langsamer als normal arbeitet. Umgekehrt bleiben eventuell an der Verpackungsvorrichtung Portionen aus, wenn von einer Übergabeeinrichtung bzw. der Aufschneidevorrichtung zu wenig Transportmover nachkommen, weil dort eine Zeit lang nicht eingelegt wird, beispielsweise bei einer etwas längeren Produkt-Beladepause. EP 1 977 893 A2 offenbart die Merkmale der Oberbegriffe der Ansprüche 1 und 10.

Es ist daher eine Aufgabe der Erfindung, ein Verfahren sowie eine Vorrichtung zum Bewegen von Portionen dahingehend zu verbessern, dass ein optimierter und kontinuierlicher Portionsstrom erreicht wird.

Die Lösung dieser Aufgabe erfolgt durch ein Verfahren bzw. eine Vorrichtung jeweils mit den Merkmalen der unabhängigen Ansprüche.

Erfindungsgemäß werden für eine oder mehrere Zonen, welche jeweils einen Abschnitt entlang der Bahn umfassen, Daten ermittelt, die zumindest die Anzahl der in der betreffenden Zone befindlichen Transportmover umfassen. Anhand der ermittelten Daten wird zumindest eine Maßnahme an wenigstens einem Funktionspunkt des Bahnsystems oder eines das Bahnsystem umfassenden Gesamtsystems durchgeführt.

Es wird gewissermaßen die Transportmover-Dichte, also die Anzahl an Transportmovern pro vorgebbarer Bahnlängeneinheit, ermittelt. Neben der Anzahl können auch die Abstände zwischen den Transportmovern ausgewertet werden. So kann beispielsweise festgestellt werden, ob vor einem Einleger eine vollständige Portionszeile vorsortiert vorliegt.

Der Abschnitt entlang der Bahn, welcher die Zone bildet, weist eine bestimmte Länge auf. Diese Länge ist vorgebbar. Alternativ oder zusätzlich ist auch die Anzahl an Transportmovern pro Zone vorgebbar. Auf diese Weise kann erreicht werden, dass sich stets eine vorbestimmte Anzahl an Transportmovern in einer Zone befindet. Bei der Zone kann es sich vorzugsweise um eine Pufferzone handeln. Es können mehrere Zonen vorgesehen sein, bevorzugt in Reihe, da meist eine einspurige Bahn vorliegt. Daneben sind bei einem mehrspurigen Bahnverlauf auch parallele Zonen denkbar.

Ein Bahnsystem ist in der Regel darauf ausgelegt, dass sich möglichst wenige Transportmover in einem Pufferbereich befinden, d.h. der Füllgrad an Transportmovern soll vergleichsweise niedrig sein. Ferner soll stets eine geringe Menge an Transportmovern vor einem Funktionspunkt auf Abruf warten, beispielsweise um eine Arbeitsstation am Funktionspunkt kontinuierlich zu betreiben. Als Arbeitsstation kann beispielsweise eine Verpackungsvorrichtung vorgesehen sein, welche z.B. einen Picker zum Einlegen von Portionen umfasst.

Beim Fördern von Portionen ergeben sich zumindest zwei markante Pufferzonen auf einer Bahnstrecke. Zum einen für Transportmover mit leeren Portionsträgern vor einer Aufschneidevorrichtung bzw. einer Übergabeeinrichtung. Zum anderen für Transportmover mit belegten Portionsträgern vor einem Einleger bzw. einer Verpackungsvorrichtung.

Durch die Überwachung der Zone bzw. der Zonen werden die Transportmover auch dann beobachtet, wenn sich diese im Bahnsystem bewegen. Im Gegensatz zum Prinzip "fire and forget" kann somit die Verteilung der Transportmover im Bahnsystem bestimmt werden. Diese Informationen können an die Funktionspunkte rückgekoppelt werden. So kann eine Regelung der Funktionspunkte erfolgen.

Mit der Zonenregelung wird quasi der Abflussbedarf an Portionen an der Verpackungsmaschine, also aus dem Bahnsystem heraus, über die Transportmover in den Pufferzonen erfasst. Auf dieser Basis kann z.B. der Aufschneidebetrieb geregelt oder zumindest optimiert werden.

Neben der Anzahl und den Abständen der Transportmover in einer Zone können insbesondere auch weitere Parameter zur Durchführung der Maßnahme einbezogen werden, beispielsweise ein gewünschter Gesamtdurchsatz an Portionen.

Erfindungsgemäß kann eine Maßnahme an einem oder mehreren Funktionspunkten des Bahnsystems oder an einem Gesamtsystem durchgeführt werden. Das Gesamtsystem kann zusätzlich zum Bahnsystem zumindest eine Aufschneidevorrichtung und/oder zumindest eine Verpackungsvorrichtung samt Einleger, also z.B. einem Roboter bzw. Picker, umfassen.

Dadurch, dass die Anzahl an Transportmovern in bestimmten Zonen des Bahnsystems ermittelt wird und die Daten zur Regelung von Funktionspunkten weitergegeben werden, wird ein möglichst optimierter und kontinuierlicher Portionsstrom im Bahnsystem in Richtung Verpackungsvorrichtung sichergestellt. Der Portionsstrom kann in Bezug auf die Soll-Leistung und die im aktuellen Betriebszustand des Gesamtsystems mögliche Leistung optimiert sein, d.h. im Zusammenspiel der integrierten sowie zugeordneten bzw. damit verknüpften Anlageteile. Die Optimierung kann sich auch auf die im Ablauf notwendigen Portionen im Bahnsystem beziehen. Die Zahl der geschnittenen Portionen in bzw. auf der Anlage kann somit erfindungsgemäß minimiert werden.

Einerseits kann eine Zone, z.B. ein Puffer für Portionen, einen angemessenen Füllgrad aufweisen. Andererseits kann ein Überfüllen und ein Hineinwachsen in eine stromaufwärtige Bahnstrecke oder einen stromaufwärtigen, davor angeordneten Funktionspunkt, aus der jeweiligen Zone heraus, vermieden werden.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln. Eine Mehrsorten-Portion kann aus Scheiben unterschiedlicher Sorte, Form und/oder Ablageform bestehen. Erfindungsgemäß können ferner auch mehrere jeweils sortenreine Verpackungen gemischt und in einem vorgebbaren Verhältnis einer gemeinsamen Umverpackung zugeführt werden.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Bahnsystem sowie eine oder mehrere Verpackungsvorrichtungen umfasst, zu erfüllen. Beispielsweise kann sich die Anforderung auf die Bildung von Formaten beziehen, wie sie für die jeweils vorgesehene Verpackungsvorrichtung bereitgestellt werden müssen.

Die Aufnahme einer Portion kann an einem Funktionspunkt, z.B. Portionierbereich, erfolgen, indem die Portion unmittelbar von einer Aufschneidevorrichtung empfangen wird. In diesem Fall kann direkt auf den Träger des Transportmovers geschnitten werden. Anschließend kann die Portion auf dem Transportmover durch die gesamte Anlage bewegt werden, insbesondere einschließlich einer Abgabe der Portion an eine Verpackungsvorrichtung im Abgabebereich. Die gesamte Anlage kann hierbei als Bahnsystem ausgebildet sein.

Es ist alternativ auch möglich, dass die Transportmover erst im Portionierbereich die Träger, mit oder ohne Portion, erhalten.

Alternativ kann die Portion bzw. ein Träger von einer herkömmlichen Fördereinrichtung, z.B. einem Förderband, an die Transportmover übergeben werden. So kann beispielsweise zunächst auf ein Förderband geschnitten und die Portion abtransportiert werden. Anschließend kann eine Übergabe der Portion von dem Förderband an ein Bahnsystem erfolgen. Dieses Bahnsystem kann als multifunktionales Zwischenglied zwischen der Aufschneidevorrichtung und einer Verpackungsvorrichtung dienen. Die Portionen können entweder direkt an die Verpackungsvorrichtung oder z.B. zunächst an eine Einlegevorrichtung, z.B. ein Einlegeband, übergeben werden, über welches die Portion dann zu einer Verpackungsvorrichtung gelangt.

Die Übergabe geschnittener Portionen auf die Transportmover kann über herkömmliche Bandanlagen und Einlegevorrichtungen an Einlegepunkten erfolgen. Dabei kann eine Teilstrecke des Magnetfördersystems unter einem Einlegeband mit gleicher Längsausrichtung hindurch geführt werden. Alternativ kann auch eine Teilstrecke des Bahnsystems quer, insbesondere im rechten Winkel, zum Einlegeband an einen Einlegepunkt geführt werden. Auf diese Weise kann beispielsweise eine Teilportion mit einer anderen Orientierung auf einen Transportmover abgelegt werden.

Es gibt verschiedene Möglichkeiten, wie eine Bahn des Bahnsystems einem Funktionspunkt zugeordnet sein kann. So kann z.B. eine Bahn einer Spur einer, insbesondere mehrspurigen, Aufschneidevorrichtung zugeordnet sein. Werden Transportmover mit Tandem-Träger eingesetzt, so kann eine Bahn auch zwei Spuren der Aufschneidevorrichtung zugeordnet sein. Entsprechend kann auch z.B. eine Bahn einer Spur einer, insbesondere mehrspurigen, Verpackungsvorrichtung zugeordnet sein. Werden Transportmover mit Tandem-Träger eingesetzt, so kann eine Bahn auch zwei Spuren der Verpackungsvorrichtung zugeordnet sein.

Dabei können auf einer Spur mit jeweils einem oder zwei Transportmovern und einem entsprechenden Träger wahlweise die Portionen einzeln oder immer zwei Portionen, z.B. mit einem Tandem-Träger, transportiert werden.

Das Bahnsystem kann als Kreislauf bzw. Ringstrecke zwischen mindestens einem Portionierbereich und mindestens einem Abnahmebereich und/oder Verpackungsbereich ausgebildet sein. Es kann insbesondere eine Rückführstrecke vorgesehen sein, auf der z.B. eine Reinigung der Portionsträger erfolgt. Die Bahn des Bahnsystems kann leere bzw. unbeladene Transportmover einspurig aus dem Verpackungsbereich auf der Zuführungsseite des Portionierbereichs bewegen. Die Portionierbereiche können auch direkt Aufschneidebereiche oder Einlegebereiche sein. Es sind nämlich an dieser Stelle auch reine Einlegepunkte denkbar, sodass Lebensmittelprodukte in irgendeiner Form nach einer Behandlung dort nur aufgegeben oder zusammengestellt werden können. Auch ist dort eine Aufnahme von Trägern mit und ohne Produkt möglich.

Jeweils ein Transportmover kann direkt oder indirekt auf einem zugeordneten Portionsträger eine Portion transportieren. Vorzugsweise eine, denn er könnte auch mehrere nacheinander aufnehmen, welche dann in Fahrtrichtung hintereinander liegen würden.

Weiterbildungen der Erfindung sind auch den abhängigen Ansprüchen, der Beschreibung sowie den beigefügten Zeichnungen zu entnehmen.

Gemäß einer Ausführungsform wird anhand der Anzahl an Transportmovern in einer oder mehreren Zonen die Leistung des Bahnsystems geregelt. So kann eine Aussage zur aktuellen Leistung allein durch die Transportmover bzw. das Bahnsystem getroffen werden. Leistung bedeutet hierbei insbesondere der Durchsatz an Portionen und betrifft die gesamte Aufschneidelinie. Auch eine Leistungssteuerung kommt somit alleine durch die Transportmover und das Bahnsystem zu Stande.

Der Aufschneidebetrieb bzw. die Portionsbehandlung kann nach dem aktuellen Betriebszustand des Bahnsystems direkt gesteuert werden, bevor die Portionen das Bahnsystem erreichen. Ferner kann die Leistung variabel angepasst werden, z.B. durch eine dynamische Anpassung der Pufferzonen bzw. von deren Überwachung.

Nach einer weiteren Ausführungsform werden die Daten durch eine Steuereinrichtung zum Steuern der Bewegungen der Transportmover in dem Bahnsystem ermittelt und/oder verarbeitet. Die Steuereinrichtung steuert die Bewegung, indem das Bahnsystem abschnittsweise magnetisiert wird. Diese Information kann genutzt werden, um festzustellen, wo sich die Transportmover befinden. Die Steuereinrichtung überwacht die Zone bzw. fragt die Anzahl an Transportmovern in den Zonen aktiv ab.

Alternativ können jedoch auch andere Vorrichtungen zur Datenermittlung vorgesehen sein, z.B. Lichtschranken, Kameras oder dergleichen.

Gemäß einer weiteren Ausführungsform erfolgt das Ermitteln der Daten in vorgegebenen oder vorgebbaren Zeitabständen. Es können folglich z.B. Zeiten festgelegt bzw. ausgewählt werden, wann eine Datenermittlung erfolgt. Je kleiner die Zeitabstände sind, desto genauer ist die Regelung.

Alternativ erfolgt das Ermitteln der Daten kontinuierlich. So kann beispielsweise permanent eine Datenermittlung stattfinden, wodurch die Präzision der Regelung erhöht wird.

Nach einer weiteren Ausführungsform ist der Funktionspunkt von einer Übergabeeinrichtung, einer Aufschneidevorrichtung, einem Einleger und/oder einer Verpackungsvorrichtung gebildet. Bei der Übergabeeinrichtung gelangt die Portion entweder auf den Transportmover oder verlässt diesen. Vom Einleger kann die Portion vom Transportmover an z.B. eine Verpackungsvorrichtung übergeben werden.

Ganz allgemein kann der Funktionspunkt sowohl bezogen auf das Bahnsystem als auch auf die transportierten Portionen verstanden werden. Dazu gehören somit u.a. Behandeln, Sortieren, Puffern, Reinigen, Auflegen, Abnehmen und Kombinieren. Ein Funktionspunkt kann somit als Punkt oder Bereich verstanden werden, an dem irgendetwas mit dem Transportmover bzw. der Portion passiert.

Erfindungsgemäß umfasst die anhand der ermittelten Daten durchgeführte Maßnahme eine Verlangsamung oder Beschleunigung des Betriebs einer Aufschneidevorrichtung und/oder einer Verpackungsvorrichtung.

Gemäß einer weiteren Ausführungsform umfasst die anhand der ermittelten Daten durchgeführte Maßnahme eine Verlangsamung oder Beschleunigung des Betriebs des Gesamtsystems. Es können einzelne Funktionseinrichtungen an Funktionspunkten vorgesehen sein, welche entsprechend gesteuert werden. So muss sichergestellt werden, dass sich genügend leere Transportmover vor der Übergabeeinrichtung bzw. der Aufschneidevorrichtung befinden. Wird ermittelt, dass sich in einer entsprechenden vorgeschalteten Zone zu wenig leere Transportmover befinden, kann die Übergabeeinrichtung bzw. die Aufschneidevorrichtung verlangsamt werden. Ferner muss sichergestellt werden, dass sich genügend volle Transportmover vor dem Einleger bzw. der Verpackungsvorrichtung befinden. Wird ermittelt, dass sich in einer entsprechenden vorgeschalteten Zone zu wenig volle Transportmover befinden, kann der Einleger bzw. die Verpackungsvorrichtung verlangsamt werden. Bei zu vielen Transportmovern kann auch eine Beschleunigung des Betriebs der jeweiligen Einrichtung erfolgen.

Es kann somit lokal Einfluss auf die Leistung oder auch auf den Gesamtbetrieb der Linie genommen werden.

Nach einer weiteren Ausführungsform wird die Maßnahme am Funktionspunkt anhand von Daten aus mehreren Zonen durchgeführt. So kann insbesondere eine Maßnahme an einem Funktionspunkt anhand von Daten aus zumindest einer Zone, vorzugsweise zwei Zonen, durchgeführt werden.

Bestimmte Zonen können miteinander kombiniert werden und sich aneinander oder an Funktionspunkte nahtlos anschließen. Ein Kriterium für eine Zone kann z.B. eine zu geringe Transportmover-Dichte sein. Dies betrifft dann insbesondere den Pufferbereich für volle Portionsträger direkt vor einem Picker. Ein anderes Kriterium für eine Zone kann z.B. eine zu hohe Transportmover-Dichte sein. Eine derartige Zone kann stromaufwärts vor der Zone mit dem Kriterium einer zu geringen Transportmover-Dichte angeordnet sein. Auf diese Weise kann eine Kombination von Zonen zum Detektieren und automatischen Ausbalancieren eines Rückstaus bzw. eines Vorrats erfolgen.

Die einem Funktionspunkt zugeordnete Zone kann vorzugsweise im Bahnstreckenverlauf benachbart, d.h. stromaufwärts oder stromabwärts angeordnet sein. Gemäß einer weiteren Ausführungsform ist die Zone in einem Bereich vor demjenigen Funktionspunkt gelegen, an dem die Maßnahme durchgeführt wird. So können die Daten im Vorfeld ermittelt werden, ehe der Transportmover zum Funktionspunkt gelangt.

Erfindungsgemäß ist die Zone anpassbar und/oder veränderbar, insbesondere produktabhängig und/oder betriebszustandsabhängig. Dies umfasst auch eine Produktionsabhängigkeit einschließlich der Verpackungsart, eine Priorisierung von mehreren Zonen untereinander mit ihrem Einfluss auf die Steuerung sowie Art und/oder Taktung der Verpackungsvorrichtung. Auch kann entschieden werden, ob überhaupt eine Zone überwacht wird. Ferner ist die Zone z.B. hinsichtlich ihrer Länge und/oder Position, also ihrer Lage, ihres Start- und/oder Endpunkts, anpassbar bzw. veränderbar. Die Anpassung bzw. Veränderung kann automatisch bzw. dynamisch, insbesondere fließend im Betrieb, oder aber auch manuell erfolgen, beispielsweise wenn eine andere Produktsorte transportiert wird.

Die Art, Auswahl und/oder Anwendung einer Zonenregelung sowie der überwachten Bereiche kann in Abhängigkeit der Bahnstrecke erfolgen. So kann diese insbesondere von deren Ausführung, Verlauf, Anzahl und/oder Anordnung von Funktionspunkten sowie der Anzahl der Transportmover im Bahnsystem abhängen.

Die Erfindung betrifft auch eine Vorrichtung nach Anspruch 1, zum Bewegen von Portionen, die jeweils wenigstens eine von einem Lebensmittelprodukt, insbesondere mittels einer Aufschneidevorrichtung, insbesondere eines Hochgeschwindigkeits-Slicers, abgetrennte Scheibe umfassen, insbesondere zur Durchführung eines erfindungsgemäßen Verfahrens.

Die Vorrichtung umfasst eine Mehrzahl individuell bewegbarer Transportmover zum Transport der Portionen und ein Bahnsystem für die Transportmover, in welchem die Transportmover entlang wenigstens einer vorgegebenen Bahn in einer Transportrichtung bewegbar sind. Ferner umfasst die Vorrichtung eine Steuereinrichtung zum Steuern der Bewegungen der Transportmover in dem Bahnsystem, wobei die Transportmover jeweils zumindest einen mit dem Bahnsystem zusammenwirkenden Läufer und wenigstens einen am Läufer angebrachten Träger für Portionen umfassen.

Es ist eine Ermittlungseinrichtung vorgesehen, die dazu ausgebildet ist, Daten zu ermitteln, die zumindest die Anzahl an Transportmovern umfassen, welche sich in einer oder mehreren Zonen befinden, die jeweils einen Abschnitt entlang der Bahn umfassen.

Zudem umfasst die Vorrichtung eine Regelungseinrichtung, die dazu ausgebildet ist, anhand der ermittelten Daten zumindest eine Maßnahme an wenigstens einem Funktionspunkt des Bahnsystems oder eines das Bahnsystem umfassenden Gesamtsystems durchzuführen.

Gemäß einer Ausführungsform ist die Ermittlungseinrichtung oder die Regelungseinrichtung dazu ausgebildet, die Daten mit Vorgabewerten zu vergleichen. So kann beispielsweise in Abhängigkeit von Produkt- und/oder Betriebsparametern die Anzahl an Transportmovern, die Transportmover-Dichte, die Lage und/oder die Länge der Zonen vorgegeben werden. Beispielsweise können die Transportmover dann derart gesteuert werden, dass die Vorgabewerte in einer Zone eingehalten werden.

Erfindungsgemäß ist es gemäß einem weiteren Ausführungsbeispiel möglich, den Betrieb der Anlage z.B. an zuführungsseitig zu erwartende Beladepausen anzupassen, indem die Zahl der im Umlauf befindlichen Portionen erhöht wird. Umgekehrt wird dabei im Anschluss auch die Zahl der leeren Träger hoch sein, so dass die Staustrecke vor dem Einlegepunkt bzw. der Übergabeeinrichtung im Verhältnis dann etwas verlängert werden muss.

Nach einer weiteren Ausführungsform sind die Ermittlungseinrichtung und die Regelungseinrichtung durch die Steuereinrichtung gebildet oder in die Steuereinrichtung integriert. Auf diese Weise ist keine zusätzliche Hardware erforderlich. Es werden lediglich zusätzliche Informationen beschafft, verarbeitet und verwendet, und zwar mit Hardware, die ohnehin vorhanden ist und z.B. zum Betrieb des Magnetfördersystems erforderlich ist.

Alle hier beschriebenen Ausführungsformen der Vorrichtung sind insbesondere dazu ausgebildet, nach dem hier beschriebenen Verfahren betrieben zu werden.

Die Erfindung wird im Folgenden beispielhaft unter Bezugnahme auf die Zeichnung beschrieben. Es zeigt:

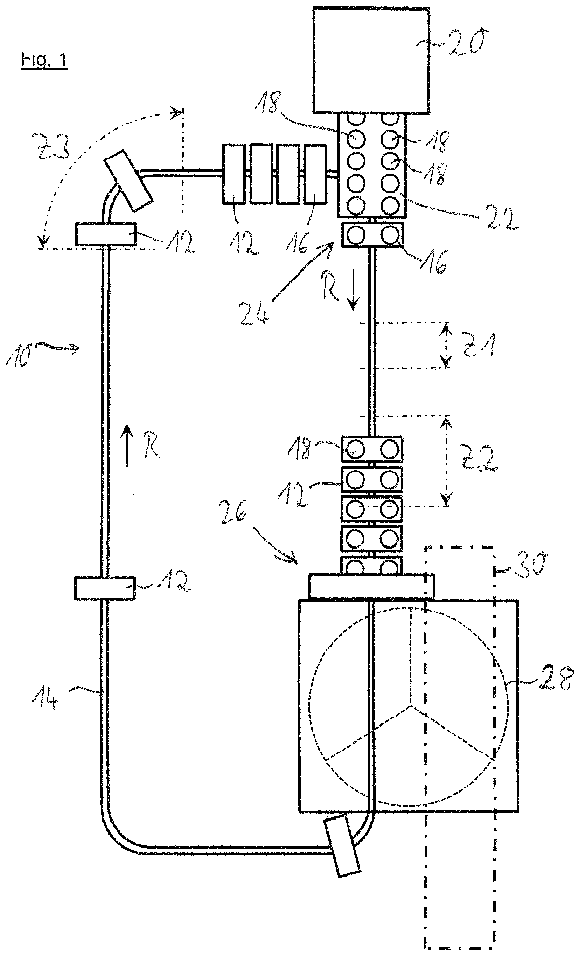

- Fig. 1: eine schematische Draufsicht einer Ausführungsform einer erfindungsgemäßen Bewegungsvorrichtung.

Zunächst ist zu bemerken, dass die dargestellte Ausführungsform rein beispielhafter Natur ist. Insbesondere können mehrere Spuren, andere Bahnverläufe und/oder andere, beispielsweise längere oder kürzere, Zonen vorgesehen sein.

Fig. 1 zeigt ein Bahnsystem 10, auf dem sich Transportmover 12 auf einer Bahn 14 in Transportrichtung R bewegen.

Die Transportmover 12 weisen im Ausführungsbeispiel einen Tandem-Träger 16 auf, auf dem zwei Portionen 18 nebeneinander aufgenommen werden können.

Die Portionen 18 gelangen von einer mehrspurigen Aufschneidevorrichtung 20, vorzugsweise einem Hochgeschwindigkeits-Slicer, auf ein Förderband 22. Leere Transportmover 12 werden unter dem Förderband 22 durchgeführt, sodass diese an einem als Übergabeeinrichtung 24 ausgebildeten Funktionspunkt die Portionen 18 empfangen können.

Die mit Portionen 18 gefüllten Transportmover 12 werden anschließend zu einem als Verpackungsvorrichtung 26 ausgebildeten Funktionspunkt transportiert.

Ein Picker 28 entnimmt dort die Portionen 18 vom Tandem-Träger 16 der Transportmover 12 und übergibt diese an einen Verpacker 30.

Es sind drei Zonen Z1, Z2 und Z3 vorgesehen. In diesen Zonen Z1, Z2, Z3 wird ermittelt, wie viele Transportmover 12 sich innerhalb der jeweiligen Zone Z1, Z2, Z3 befinden. Die Zone 1 wird hinsichtlich einer zu hohen Transportmover-Dichte überwacht, wodurch ein zu langer Rückstau vor der Verpackungsvorrichtung 26 verhindert wird, damit sich nicht unnötig viele Portionen 18 im Umlauf befinden.

Die Zone 2 wird hinsichtlich einer zu geringen Transportmover-Dichte in einem Pufferbereich für volle Transportmover 12 direkt vor dem Picker 28 überwacht.

Auch in Zone 3 wird eine zu geringe Transportmover-Dichte im Pufferbereich für leere Transportmover 12 direkt vor der Übergabeeinrichtung 24 überwacht. Sind dort zu wenig leere Transportmover 12, wird der Betrieb der Aufschneidevorrichtung 20 verlangsamt bzw. zumindest vorrübergehend gestoppt.

Es findet somit eine Rückkopplung statt. Die ermittelten Daten, welche z.B. die Transportmover-Dichte in den jeweiligen Zonen Z1, Z2, Z3 betreffen, werden dazu verwendet, Maßnahmen an den Funktionspunkten 24, 26 durchzuführen.

Das Gesamtsystem kann auf diese Weise auf die tatsächlichen Gegebenheiten reagieren und so einen kontinuierlichen Portionsstrom sicherstellen.

### Bezuqszeichenliste

- 10: Bahnsystem
- 12: Transportmover
- 14: Bahn
- 16: Tandem-Träger
- 18: Portion
- 20: Aufschneidevorrichtung
- 22: Förderband
- 24: Übergabeeinrichtung, Funktionspunkt
- 26: Verpackungsvorrichtung, Funktionspunkt
- 28: Picker
- 30: Verpacker

- R: Transportrichtung
- Z1: Zone 1
- Z2: Zone 2
- Z3: Zone 3

## Patentansprüche

1. Verfahren zum Bewegen von Portionen (18), die jeweils wenigstens eine von einem Lebensmittelprodukt, insbesondere mittels zumindest einer Aufschneidevorrichtung (20), insbesondere eines Hochgeschwindigkeits-Slicers, abgetrennte Scheibe umfassen, bei dem
- eine Mehrzahl an Transportmovern (12) zum Transport der Portionen (18) individuell in einem Bahnsystem (10) entlang wenigstens einer vorgegebenen Bahn (14) in einer Transportrichtung (R) bewegt werden, wobei die Transportmover (12) jeweils zumindest einen mit dem Bahnsystem (10) zusammenwirkenden Läufer und wenigstens einen am Läufer angebrachten Träger (16) für Portionen (18) umfassen,
- für eine oder mehrere Zonen (Z1, Z2, Z3), welche jeweils einen Abschnitt entlang der Bahn (14) umfassen, Daten ermittelt werden, die zumindest die Anzahl der in der betreffenden Zone (Z1, Z2, Z3) befindlichen Transportmover (12) umfassen, und
- anhand der ermittelten Daten zumindest eine Maßnahme an wenigstens einem Funktionspunkt (24, 26) des Bahnsystems (10) oder eines das Bahnsystem (10) umfassenden Gesamtsystems durchgeführt wird, **dadurch gekennzeichnet, dass**
die Zone (Z1, Z2, Z3) anpassbar und/oder veränderbar ist, insbesondere produktabhängig und/ oder betriebszustandsabhängig, und wobei
die anhand der ermittelten Daten durchgeführte Maßnahme eine Verlangsamung oder Beschleunigung des Betriebs zumindest einer Aufschneidevorrichtung (20) und/oder zumindest einer Verpackungsvorrichtung (26) umfasst.

2. Verfahren nach Anspruch 1,
**dadurch gekennzeichnet, dass**
anhand der Anzahl an Transportmovern (12) in einer oder mehreren Zonen (Z1, Z2, Z3) die Leistung des Bahnsystems (10) geregelt wird.

3. Verfahren nach Anspruch 1 oder 2,
**dadurch gekennzeichnet, dass**
die Daten durch eine Steuereinrichtung zum Steuern der Bewegungen der Transportmover (12) in dem Bahnsystem (10) ermittelt und/verarbeitet werden.

4. Verfahren nach einem der vorhergehenden Ansprüche,
**dadurch gekennzeichnet, dass**
das Ermitteln der Daten in vorgegebenen oder vorgebbaren Zeitabständen erfolgt.

5. Verfahren nach einem der Ansprüche 1 bis 3,
**dadurch gekennzeichnet, dass**
das Ermitteln der Daten kontinuierlich erfolgt.

6. Verfahren nach einem der vorhergehenden Ansprüche,
**dadurch gekennzeichnet, dass**
der Funktionspunkt von zumindest einer Übergabeeinrichtung (24), zumindest einer Aufschneidevorrichtung (20), zumindest einem Einleger und/oder zumindest einer Verpackungsvorrichtung (26) gebildet ist.

7. Verfahren nach einem der vorhergehenden Ansprüche,
**dadurch gekennzeichnet, dass**
die anhand der ermittelten Daten durchgeführte Maßnahme zusätzlich eine Verlangsamung oder Beschleunigung des Betriebs des Gesamtsystems umfasst.

8. Verfahren nach einem der vorhergehenden Ansprüche,
**dadurch gekennzeichnet, dass**
die Maßnahme am Funktionspunkt (24, 26) anhand von Daten aus mehreren Zonen (Z1, Z2, Z3) durchgeführt wird.

9. Verfahren nach einem der vorhergehenden Ansprüche,
**dadurch gekennzeichnet, dass**
die Zone (Z1, Z2, Z3) in einem Bereich vor demjenigen Funktionspunkt (24, 26) gelegen ist, an dem die Maßnahme durchgeführt wird.

10. Vorrichtung zum Bewegen von Portionen (18), die jeweils wenigstens eine von einem Lebensmittelprodukt, insbesondere mittels einer Aufschneidevorrichtung (20), insbesondere eines Hochgeschwindigkeits-Slicers, abgetrennte Scheibe umfassen, insbesondere zur Durchführung eines Verfahrens nach einem der vorhergehenden Ansprüche,
mit einer Mehrzahl individuell bewegbarer Transportmover (12) zum Transport der Portionen (18),
mit einem Bahnsystem (10) für die Transportmover (12), in welchem die Transportmover (12) entlang wenigstens einer vorgegebenen Bahn (14) in einer Transportrichtung (R) bewegbar sind,
mit einer Steuereinrichtung zum Steuern der Bewegungen der Transportmover (12) in dem Bahnsystem (10),
wobei die Transportmover (12) jeweils zumindest einen mit dem Bahnsystem (10) zusammenwirkenden Läufer und wenigstens einen am Läufer angebrachten Träger (16) für Portionen (18) umfassen,
mit einer Ermittlungseinrichtung, die dazu ausgebildet ist, Daten zu ermitteln, die zumindest die Anzahl an Transportmovern (12) umfassen, welche sich in einer oder mehreren Zonen (Z1, Z2, Z3) befinden, die jeweils einen Abschnitt entlang der Bahn (14) umfassen,
**dadurch gekennzeichnet, dass** die Zone (Z1, Z2, Z3) anpassbar und/oder veränderbar ist, insbesondere produktabhängig und/oder betriebszustandsabhängig,
und wobei die Vorrichtung eine Regeleinrichtung umfasst, die dazu ausgebildet ist, anhand der ermittelten Daten zumindest eine Maßnahme an wenigstens einem Funktionspunkt (24, 26) des Bahnsystems (10) oder eines das Bahnsystem (10) umfassenden Gesamtsystems durchzuführen, wobei die anhand der ermittelten Daten durchgeführte Maßnahme eine Verlangsamung oder Beschleunigung des Betriebs zumindest einer Aufschneidevorrichtung (20) und/oder zumindest einer Verpackungsvorrichtung (26) umfasst.

11. Vorrichtung nach Anspruch 10,
**dadurch gekennzeichnet, dass**
die Ermittlungseinrichtung oder die Regelungseinrichtung dazu ausgebildet ist, die Daten mit Vorgabewerten zu vergleichen.

12. Vorrichtung nach Anspruch 10 oder 11,
**dadurch gekennzeichnet, dass**
die Ermittlungseinrichtung und die Regelungseinrichtung durch die Steuereinrichtung gebildet oder in die Steuereinrichtung integriert sind.

## Claims

1. A method of moving portions (18), which each comprise at least one slice cut off from a food product, in particular by means of at least one slicing apparatus (20), in particular by means of a high-speed slicer, in which
- a plurality of transport movers (12) for transporting the portions (18) are individually moved in a path system (10) along at least one predefined path (14) in a transport direction (R), wherein the transport movers (12) each comprise at least one runner cooperating with the path system (10) and at least one carrier (16) for portions (18) which is attached to the runner;
- data are determined for one or more zones (Z1, Z2, Z3) which each comprise a section along the path (14), said data comprising at least the number of transport movers (12) located in the respective zone (Z1, Z2, Z3); and
- at least one measure is performed on the basis of the determined data at at least one functional point (24, 26) of the path system (10) or of a total system comprising the path system (10), **characterized in that** the zone (Z1, Z2, Z3) is adaptable and/or changeable, in particular in dependence on the product and/or on the operating state, and wherein the measure performed on the basis of the determined data comprises slowing down or speeding up the operation of at least one slicing apparatus (20) and/or at least one packaging apparatus (26).

2. A method in accordance with claim 1,
**characterized in that**
the performance of the path system (10) is regulated on the basis of the number of transport movers (12) in one or more zones (Z1, Z2, Z3).

3. A method in accordance with claim 1 or claim 2,
**characterized in that**
the data are determined and/or processed by a control device for controlling the movements of the transport movers (12) in the path system (10).

4. A method in accordance with any one of the preceding claims,
**characterized in that**
the determination of the data takes place in predefined or predefinable time intervals.

5. A method in accordance with any one of the claims 1 to 3,
**characterized in that**
the determination of the data takes place continuously.

6. A method in accordance with any one of the preceding claims,
**characterized in that**
the functional point is formed by at least one transfer device (24), at least one slicing apparatus (20), at least one feeder and/or at least one packaging apparatus (26).

7. A method in accordance with any one of the preceding claims,
**characterized in that**
the measure performed on the basis of the determined data additionally comprises slowing down or speeding up the operation of the total system.

8. A method in accordance with any one of the preceding claims,
**characterized in that**
the measure is performed at the functional point (24, 26) on the basis of data from a plurality zones (Z1, Z2, Z3).

9. A method in accordance with any one of the preceding claims, **characterized in that**
the zone (Z1, Z2, Z3) is disposed in a region in front of that functional point (24, 26) at which the measure is performed.

10. An apparatus for moving portions (18) which each comprise at least one slice cut off from a food product, in particular by means of a slicing apparatus (20), in particular by means of a high-speed slicer, in particular for carrying out a method in accordance with any one of the preceding claims, said apparatus comprising
a plurality of individually movable transport movers (12) for transporting the portions (18);
a path system (10) for the transport movers (12) in which the transport movers (12) are movable along at least one predefined path (14) in a transport direction (R);
a control device for controlling the movements of the transport movers (12) in the path system (10),
wherein the transport movers (12) each comprise at least one runner cooperating with the path system (10) and at least one carrier (16) for portions (18) which is attached to the runner; and
a determination device which is configured to determine data which comprise at least the number of transport movers (12) which are located in one or more zones (Z1, Z2, Z3) that each comprise a section along the path (14),
**characterized in that** the zone (Z1, Z2, Z3) is adaptable and/or changeable, in particular in dependence on the product and/or on the operating state, and wherein the apparatus comprises a regulation device which is configured to perform at least one measure on the basis of the determined data at at least one functional point (24, 26) of the path system (10) or of a total system comprising the path system (10), wherein the measure performed on the basis of the determined data comprises slowing down or speeding up the operation of at least one slicing apparatus (20) and/or at least one packaging apparatus (26).

11. An apparatus in accordance with claim 10,
**characterized in that**
the determination device or the regulation device is configured to compare the data with default values.

12. An apparatus in accordance with claim 10 or claim 11,
**characterized in that**
the determination device and the regulation device are formed by the control device or are integrated into the control device.

## Revendications

1. Procédé pour déplacer des portions (18) qui comprennent chacune au moins une tranche découpée d'un produit alimentaire, en particulier à l'aide d'au moins un dispositif de tranchage (20), en particulier à l'aide d'une trancheuse à haute performance,
dans lequel
- une pluralité de chariots de transport (12) pour transporter les portions (18) sont déplacés individuellement dans un système de voie (10) le long d'au moins une voie prédéterminée (14) dans une direction de transport (R), les chariots de transport (12) comprenant chacun au moins un curseur coopérant avec le système de voie (10) et au moins un support (16) pour les portions (18) fixé au curseur,
- des données sont déterminées pour une ou pour plusieurs zones (Z1, Z2, Z3) qui comprennent chacune une section le long de la voie (14), lesdites données incluant au moins le nombre de chariots de transport (12) situés dans la zone concernée (Z1, Z2, Z3), et
- sur la base des données déterminées, au moins une action est effectuée à au moins un point de fonctionnement (24, 26) du système de voie (10) ou d'un système global comprenant le système de voie (10),
**caractérisé en ce que**
la zone (Z1, Z2, Z3) est adaptable et/ou variable, en particulier en fonction du produit et/ou en fonction de l'état de fonctionnement, et
l'action effectuée sur la base des données déterminées comprend un ralentissement ou une accélération du fonctionnement d'au moins un dispositif de tranchage (20) et/ou d'au moins un dispositif d'emballage (26).

2. Procédé selon la revendication 1,
**caractérisé en ce que**
la performance du système de voie (10) est régulée sur la base du nombre de chariots de transport (12) dans une ou dans plusieurs zones (Z1, Z2, Z3).

3. Procédé selon la revendication 1 ou 2,
**caractérisé en ce que**
les données sont déterminées et/ou traitées par un moyen de commande pour commander les mouvements des chariots de transport (12) dans le système de voie (10).

4. Procédé selon l'une des revendications précédentes,
**caractérisé en ce que**
la détermination des données s'effectue à des intervalles de temps prédéfinis ou prédéfinissables.

5. Procédé selon l'une des revendications 1 à 3,
**caractérisé en ce que**
la détermination des données s'effectue en continu.

6. Procédé selon l'une des revendications précédentes,
**caractérisé en ce que**
le point de fonctionnement est formé par au moins un moyen de transfert (24), par au moins un dispositif de tranchage (20), par au moins un moyen d'insertion et/ou par au moins un dispositif d'emballage (26).

7. Procédé selon l'une des revendications précédentes,
**caractérisé en ce que**
l'action effectuée sur la base des données déterminées comprend en supplément un ralentissement ou une accélération du fonctionnement du système global.

8. Procédé selon l'une des revendications précédentes,
**caractérisé en ce que**
l'action au niveau du point de fonctionnement (24, 26) est effectuée sur la base de données provenant de plusieurs zones (Z1, Z2, Z3).

9. Procédé selon l'une des revendications précédentes,
**caractérisé en ce que**
la zone (Z1, Z2, Z3) est située dans une région en amont du point de fonctionnement (24, 26) au niveau duquel l'action est effectuée.

10. Dispositif de déplacement de portions (18) qui comprennent chacune au moins une tranche découpée d'un produit alimentaire, en particulier à l'aide d'un dispositif de tranchage (20), en particulier à l'aide d'une trancheuse à haute performance, en particulier pour la mise en oeuvre d'un procédé selon l'une des revendications précédentes,
comportant
une pluralité de chariots de transport (12) mobiles individuellement pour transporter les portions (18),
un système de voie (10) pour les chariots de transport (12), dans lequel les chariots de transport (12) sont mobiles le long d'au moins une voie prédéterminée (14) dans une direction de transport (R),
un moyen de commande pour commander les mouvements des chariots de transport (12) dans le système de voie (10),
les chariots de transport (12) comprenant chacun au moins un curseur coopérant avec le système de voie (10) et au moins un support (16) pour les portions (18) fixé au curseur,
et comportant un moyen de détermination qui est réalisé pour déterminer des données incluant au moins le nombre de chariots de transport (12) qui sont situés dans une ou dans plusieurs zones (Z1, Z2, Z3) et qui comprennent chacun au moins une section le long de la voie (14), **caractérisé en ce que**
la zone (Z1, Z2, Z3) est adaptable et/ou variable, en particulier en fonction du produit et/ou en fonction de l'état de fonctionnement, et
le dispositif comporte un moyen de régulation,
qui est réalisé pour effectuer, sur la base des données déterminées, au moins une action à au moins un point de fonctionnement (24, 26) du système de voie (10) ou d'un système global comprenant le système de voie (10), l'action effectuée sur la base des données déterminées comprenant un ralentissement ou une accélération du fonctionnement d'au moins un dispositif de tranchage (20) et/ou d'au moins un dispositif d'emballage (26).

11. Dispositif selon la revendication 10,
**caractérisé en ce que**
le moyen de détermination ou le moyen de régulation est réalisé pour comparer les données avec des valeurs de consigne.

12. Dispositif selon la revendication 10 ou 11,
**caractérisé en ce que**
le moyen de détermination et le moyen de régulation sont formés par le moyen de commande ou sont intégrés dans le moyen de commande.
